# EUROPÄISCHE PATENTSCHRIFT

(11) **EP 2 966 290 B1**
(45) Veröffentlichungstag und Bekanntmachung des Hinweises auf die Patenterteilung: **31.01.2018**
(21) Anmeldenummer: 15168602.9
(22) Anmeldetag: 21.05.2015
(51) Int. Cl.: F02M 26/54, F16K 31/53, F16K 31/04, F16K 1/00, F16H 1/32

(54) **VENTILVORRICHTUNG ZUR ABGASRÜCKFÜHRUNG IN EINEM VERBRENNUNGSMOTOR**
VALVE DEVICE FOR EXHAUST GAS RECIRCULATION IN A COMBUSTION ENGINE
DISPOSITIF DE SOUPAPE DESTINÉ À LA RECIRCULATION DE GAZ D'ÉCHAPPEMENT DANS UN MOTEUR À COMBUSTION INTERNE

(30) Priorität: 02.07.2014 DE 102014109289
(43) Veröffentlichungstag der Anmeldung: 13.01.2016
(73) Patentinhaber: Pierburg GmbH, 41460 Neuss (DE)
(72) Erfinder: HEMSING, Axel, 40545 Düsseldorf (DE); SARI, Osman, 41516 Grevenbroich (DE); SIMONS, Norbert, 40233 Düsseldorf (DE)
(74) Vertreter: Patentanwälte ter Smitten Eberlein-Van Hoof Rütten Partnerschaftsgesellschaft mbB

(56) Entgegenhaltungen:
- EP-A1- 1 584 541
- EP-A1- 1 835 197
- DE-C1- 19 961 756
- JP-A- H01 158 249
- US-A1- 2003 230 735
- US-A1- 2005 184 265

## Beschreibung

Die Erfindung betrifft eine Ventilvorrichtung zur Abgasrückführung in einem Verbrennungsmotor mit einer Antriebseinheit, bestehend aus einem Elektromotor mit einer Antriebswelle, einem Exzenter und einem Getriebe, und einer Ventileinheit, bestehend aus einem Verstellelement und einem Ventilkörper, wobei die Ventileinheit mittels der Antriebseinheit bewegbar ist.

Derartige Ventilvorrichtungen zur Abgasrückführung sind bekannt und dienen zur Regelung einer in die Verbrennungsräume eines Verbrennungsmotors zurückgeführten Abgasmenge zur Reduzierung von Schadstoffemissionen.

Es sind verschiedene Ausführungen dieser Abgasrückführventile bekannt. In den letzten Jahren haben sich elektromotorisch angetriebene Hubventile im Bereich der Personenkraftwagen durchgesetzt, bei denen die rotatorische Bewegung der Antriebswelle des Elektromotors über ein Getriebe in eine translatorische Bewegung der Ventilstange umgewandelt wird. Als Getriebe werden hierfür Planetengetriebe oder Stirnradgetriebe verwendet, auf deren Ausgangswelle ein Exzenter angeordnet ist, der in eine Kulisse eines mit der Ventilstange verbundenen Kopplungselementes zur Umwandlung der Bewegung greift. Ein derartiges Abgasrückführventil ist beispielsweise aus der DE 199 47 971 A1 bekannt. Ein solches Ventil benötigt jedoch wegen der Anordnung des Elektromotors senkrecht zur Hubbewegung des Ventils einen relativ großen seitlichen Bauraum.

Des Weiteren sind Ventile bekannt geworden, bei denen die Achse des Elektromotors der Bewegungsrichtung des Ventils entspricht, so dass ein geringerer seitlicher Bauraum benötigt wird. Ein solches Ventil ist beispielsweise aus der DE 10 2008 049 251 A1 bekannt. Der Elektromotor treibt bei diesem Ventil ein Planetengetriebe an, dessen Hohlrad im Ventilgehäuse gelagert ist und an dem eine Kulisse ausgebildet ist, in die ein quer zur Ventilstange und an der Ventilstange befestigter Querholm greift. Die Ventilstange ist gegen Verdrehen gesichert, so dass bei Drehung des Hohlrades je nach Drehrichtung der Querholm nach unten oder oben gedrückt wird. Ein derartiges Ventil benötigt wiederum sehr viel Bauraum in axialer Richtung und weist aufgrund der notwendigen Lagerungen eine erhöhte Verschmutzungsempfindlichkeit auf.

Des Weiteren ist aus der DE 199 61 756 C1 ein Abgasrückführventil bekannt, bei dem das Ventil eine kombinierte translatorische und rotatorische Bewegung entsprechend eines Spindeltriebes vollzieht. Hierzu ist die Ventilstange als Spindel ausgebildet, die sich in einer Spindelmutter dreht und über ein Harmonic-Drive Getriebe angetrieben wird. Wie die Bewegung vom Getriebe auf die sich translatorisch bewegende Ventilstange übertragen wird, wird nicht offenbart. Dieses Ventil benötigt im Vergleich zu bekannten Ausführungen einen deutlich verringerten Bauraum, jedoch ist der Flex-Spline dieses Getriebes insbesondere in korrosiver Umgebung bezüglich seiner Haltbarkeit eingeschränkt.

Zusätzlich ist aus der US 2005/0184265 A1 ein Walzenventil bekannt, welches über ein Exzentergetriebe rotatorisch angetrieben wird, bei dem ein exzentrisch gelagertes Planetenrad in einem Hohlrad gedreht wird, welches über eine Kupplung mit dem Walzenventil verbunden ist.

Es stellt sich daher die Aufgabe, eine Ventilvorrichtung zur Abgasrückführung in einem Verbrennungsmotor zu schaffen, die einen möglichst geringen Bauraum benötigt, eine lange Haltbarkeit aufweist und unempfindlich gegen Verschmutzungen und Korrosion ist. Dabei soll die Anzahl benötigter Bauteile zur Reduzierung der Herstell- und Montagekosten verringert werden. Das durch den Elektromotor aufzubringende Drehmoment soll gleichzeitig möglichst nicht steigen.

Diese Aufgabe wird durch eine Ventilvorrichtung zur Abgasrückführung in einem Verbrennungsmotor mit den Merkmalen des Hauptanspruchs 1 gelöst.

Dadurch, dass das Getriebe ein Exzentergetriebe ist, bei dem ein exzentrisch angetriebenes Planetenrad abschnittsweise in ein feststehendes Hohlrad greift und über eine Oldham-Kupplung mit dem Verstellelement gekoppelt ist, welches eine Ventilstange mit einer Spindel ist, die in eine Spindelmutter greift, über die die Ventilstange gelagert ist, wobei an dem Verstellelement ein Mitnehmerhebel ausgebildet ist, der rotationsübertragend in eine Aufnahme an einer Mitnehmerscheibe greift, welche über ein Federelement in Richtung der Kupplungsscheibe belastet ist, wobei die Aufnahme der Mitnehmerscheibe eine axiale Erstreckung aufweist, die zumindest der Hubhöhe der Ventilstange entspricht und wobei das Federelement als Drehfeder dient, über die die Spindel in Richtung einer Ausgangsstellung belastet ist, kann eine hohe Übersetzung bei minimalem Bauteileaufwand und minimalem Platzbedarf erreicht werden, da die Drehachse des Elektromotors parallel zur Hubachse des Ventils verläuft wird insbesondere kein zusätzlicher seitlicher Bauraum benötigt. Die Kupplung ist dabei geeignet, die taumelnde Bewegung des Planetenrades aufzunehmen und in eine nicht taumelnde rein rotatorische Bewegung umzuwandeln, die im Folgenden über die Spindel ohne zusätzliche Bauteile in eine kombinierte Hub- und Drehbewegung der Ventilstange umgewandelt wird. Des Weiteren ist ein derartiges Getriebe unempfindlich gegen Verschmutzungen. Zur weiteren Bewegungsübertragung ist somit an dem Verstellelement ein Mitnehmerhebel ausgebildet, der rotationsübertragend in eine Aufnahme an der Mitnehmerscheibe greift. Entsprechend erfolgt eine Drehbewegung des Verstellelementes. Für diese Bewegungsübertragung vom Elektromotor zum Verstellelement werden lediglich einfache, axial ineinander zu steckende Bauteile verwendet, die einen sehr geringen Bauraumbedarf aufweisen. Da die Mitnehmerscheibe über ein Federelement in Richtung der Kupplungsscheibe belastet ist und die Aufnahme der Mitnehmerscheibe eine axiale Erstreckung aufweist, die zumindest der Hubhöhe der Ventilstange entspricht, bleibt trotz der translatorischen Bewegung der Spindel die Mitnehmerscheibe weiterhin mit dem Mitnehmerhebel rotatorisch gekoppelt bleibt. Dabei wird eine translatorische Bewegung des Mitnehmerhebels verhindert. Zusätzlich dient das Federelement als Drehfeder, über die die Spindel in Richtung einer Ausgangsstellung belastet ist. Auf diese wird bei Ausfall des Elektromotors oder Beschädigungen des Getriebes die Ventilstange und damit der Regelkörper in eine fail-safe Position zurückgestellt.

Vorzugsweise ist dabei der Exzenter zylindrisch ausgebildet und auf der Antriebswelle befestigt, auf dem das Planetenrad gelagert ist. So sind keine zusätzlichen Baumteile für den taumelnden Antrieb des Planetenrades erforderlich.

Hierzu sind in einer bevorzugten Ausbildung an der zum Verstellelement weisenden Seite des Planetenrades zwei axiale Vorsprünge ausgebildet, die sich in radialer Richtung erstrecken und die in zwei erste Ausnehmungen einer Kupplungsscheibe der Oldham-Kupplung greifen. Ein derartiger Aufbau ist besonders einfach herzustellen und zu montieren.

Dabei sind die Ausnehmungen der Kupplungsscheibe radial gegenüberliegend ausgebildet und zum Ausgleich der Taumelbewegung des Planetenrades greifen die Vorsprünge des Planetenrades in die Ausnehmungen der Kupplungsscheibe, welche eine größere radiale Erstreckung aufweisen als die Vorsprünge des Planetenrades. Entsprechend können die Vorsprünge in den Ausnehmungen radial gleiten, wodurch die Kupplungsscheibe die rein rotatorische Bewegung vollziehen kann.

Zusätzlich weist die Kupplungsscheibe vorzugsweise zwei weitere radiale Ausnehmungen auf, wobei die insgesamt vier Ausnehmungen um 90° versetzt zueinander ausgebildet sind, und wobei an einer mit dem Verstellelement gekoppelten Mitnehmerscheibe zwei axiale Vorsprünge ausgebildet sind, die in die zwei weiteren radialen Ausnehmungen der Kupplungsscheibe greifen. So wird auf einfache Weise die Drehbewegung der Kupplungsscheibe durch Formschluss auf die Mitnehmerscheibe übertragen.

Weiterhin ist vorzugsweise am Exzenter eine Magnetringplatte befestigt, deren Magnete mit einem berührungslosen Sensor kommunizieren. So wird eine Lagerückmeldung zur Steuerung des Ventils verwirklicht. Des Weiteren sind Fehler identifizierbar.

Vorzugsweise ist das Hohlrad in einem Antriebsgehäuse befestigt oder einstückig mit dem Antriebsgehäuse ausgebildet. Somit ist keine zusätzliche Befestigung oder Herstellung des Hohlrades erforderlich, so dass der Montageaufwand sinkt und der Bauraumbedarf minimiert wird.

Es wird somit eine Ventilvorrichtung zur Abgasrückführung in einem Verbrennungsmotor geschaffen, welche besonders kompakt ist, einfach zu montieren ist, wenige Bauteile aufweist und nicht zuletzt aufgrund geringer Anforderungen bezüglich der Toleranzen kostengünstig herstellbar ist.

Ein Ausführungsbeispiel einer erfindungsgemäßen Ventilvorrichtung zur Abgasrückführung ist in den Figuren dargestellt und wird nachfolgend beschrieben.

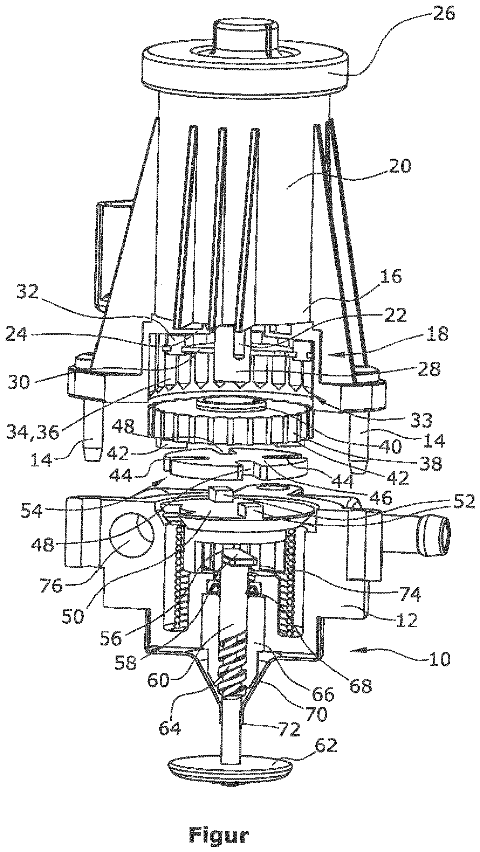

Die Figur zeigt eine perspektivische Ansicht einer erfindungsgemäßen Ventilvorrichtung in gesprengter Darstellung.

Die erfindungsgemäße, in der Figur dargestellte Ventilvorrichtung besteht aus einer Ventileinheit 10 in einem Ventilgehäuse 12, welches über Schrauben 14 mit einem Antriebsgehäuse 16 einer Antriebseinheit 18 verbunden ist. Im Antriebsgehäuse 16 ist ein Elektromotor 20 mit einer Antriebswelle 22 angeordnet, die durch eine Auflagefläche 24 ragt, auf der eine nicht sichtbare Platine angeordnet ist. Der Elektromotor 20 wird von einer offenen Seite in das Antriebsgehäuse 16 eingesetzt, die durch einen Deckel 26 verschlossen wird, mittels dessen der Elektromotor 20 gegen die Auflagefläche 24 axial verspannt wird.

Auf der Antriebswelle 22 ist ein als Exzenter 28 dienender, exzentrisch zur Antriebswelle 22 und auf dieser befestigter zylindrischer Zapfen angeordnet, der zusätzlich eine Magnetringplatte 30 trägt, die an ihrem Außenumfang mit Magneten 32 mit wechselnden Polen bestückt ist, die beispielsweise mit zwei auf der Platine angeordneten berührungslosen Sensoren in Form von Hall-Schaltern zur Lagerückmeldung kommunizieren.

Ein folgendes Exzentergetriebe 33 besteht aus einem feststehenden Hohlrad 36, welches als Innenverzahnung 34 am Innenumfang des Antriebsgehäuses 16 ausgebildet ist und den Exzenter 28 radial umgibt sowie einem mit diesem Hohlrad 36 kämmenden Planetenrad 38, welches in dieser Ausführung über ein Gleitlager 40 drehbar auf dem Exzenter 28 angeordnet ist, so dass das Planetenrad 38 bei Betätigung des Elektromotors 20 taumelnd auf der Innenverzahnung 34 des Hohlrades 36 abrollt.

An der vom Elektromotor 20 abgewandten Seite des Planetenrades 38 sind zwei radial gegenüberliegende sich radial und axial erstreckende Vorsprünge 42 ausgebildet, welche in zwei erste korrespondierende Ausnehmungen 44 einer Kupplungsscheibe 46 greifen, wobei die Ausnehmungen 44 eine größere radiale Erstreckung aufweisen als die Vorsprünge 42. An der Kupplungsscheibe 46 sind jeweils um 90° zu den Ausnehmungen 44 versetzt zwei weitere radiale Ausnehmungen 48 ausgebildet, in welche wiederum zwei korrespondierende, sich axial von einer Mitnehmerscheibe 50 in Richtung der Kupplungsscheibe 46 erstreckende Vorsprünge 52 ragen, deren radiale Erstreckung ebenfalls geringer ist als die der Ausnehmungen 48. Die Kupplungsscheibe 46 sowie die Vorsprünge 52 der Mitnehmerscheibe 50 und die Vorsprünge 42 des Planetenrades 38 bilden somit eine Oldham-Kupplung 54, welche einerseits Positionsabweichungen zwischen den Gehäuseteilen 12, 16 ausgleicht und andererseits die Taumelbewegung des Planetenrades 38 in eine rotatorische Bewegung um eine feste Drehachse der Mitnehmerscheibe 50 umwandelt. Die Oldham-Kupplung 54 bildet gemeinsam mit dem Exzentergetriebe 33 sowie dem Elektromotor 20 und dem Antriebsgehäuse 16 die Antriebseinheit 18 der Ventilvorrichtung.

An der zu den Vorsprüngen 52 entgegengesetzten axialen Seite der Mitnehmerscheibe 50 ist eine sich in axialer Richtung erstreckende Aufnahme 56 ausgebildet, in der ein Mitnehmerhebel 58 drehfest angeordnet ist. Dieser Mitnehmerhebel 58 ist an einem Verstellelement 60 in Form einer Ventilstange befestigt, an deren entgegengesetzten axialen Ende ein Ventilkörper 62 in Form eines mit einem nicht dargestellten Ventilsitz zusammenwirkenden Ventiltellers ausgebildet ist.

Die Ventilstange 60 weist eine Spindel 64 auf, die in einer als Lagerbuchse dienenden Spindelmutter 66 gelagert ist, die im Ventilgehäuse 12 angeordnet ist. Die Ventilstange 60 wird in Richtung der Antriebseinheit 18 über einen Radialwellendichtring 68, der am zur Antriebseinheit 18 weisenden axialen Ende der Spindelmutter 66 im Ventilgehäuse 60 die Spindel 64 umgebend angeordnet ist, gegenüber einem Gasstrom abgedichtet. Zusätzlich ist am zum Ventilkörper 62 weisenden Ende des Ventilgehäuses 12 ein Abschirmblech 70 befestigt, welches die Ventilstange 60 radial umgibt und einerseits Ablagerungen über Schabekanten 72 abschert und andererseits eine thermische Abschirmung der Antriebseinheit 18 gegenüber dem heißen Gasstrom bewirkt.

Wird nun der Elektromotor 20 betätigt, wird die Bewegung der Antriebwelle 22 in eine exzentrische Drehbewegung des Exzenters 28 umgewandelt. Hierdurch rollt das Planetenrad 38 auf dem Hohlrad 36 ab. Die entstehende taumelnde Bewegung des Planetenrades 38 wird über die Oldham-Kupplung 54 in eine reine Drehbewegung des Mitnehmerhebels 58 umgewandelt. Durch die drehfeste Anordnung des Mitnehmerhebels 58 in der Aufnahme 56 der Mitnehmerscheibe 50 entsteht eine Rotation der Ventilstange 60, so dass die Spindel 64 in der Spindelmutter 66 rotiert. Dies hat zur Folge, dass je nach Drehrichtung des Elektromotors 20 die Ventilstange 60 mit dem Ventilkörper 62 angehoben beziehungsweise abgesenkt wird. Dabei vollzieht die Ventilstange 60 eine kombinierte translatorische und rotatorische Bewegung, so dass der Ventilkörper 62 zur Regelung eines Abgasstroms auf einen Ventilsitz abgesenkt oder von diesem abgehoben wird.

Um bei dieser Bewegung einerseits einen Eingriff der Vorsprünge 42, 52 in die Ausnehmungen 44, 48 der Oldham-Kupplung 54 zur Bewegungsübertragung sicher zu stellen und anderseits einen Eingriff des Mitnehmerhebels 58 in der Aufnahme 56 der Mitnehmerscheibe 50 sicher zu stellen, ist im Innern des Ventilgehäuses 12 ein Federelement 74 angeordnet, deren erstes axiales Ende sich gegen das Ventilgehäuse 12 abstützt und deren entgegengesetztes axiales Ende gegen die Mitnehmerscheibe 50 anliegt. Über dieses Federelement 74, welches als Schraubenfeder ausgeführt ist, wird die Mitnehmerscheibe mit geringer Kraft in Richtung der Kupplungsscheibe belastet, wodurch die Lage der Oldham-Kupplung 56 im Antriebsgehäuse 16 axial weitestgehend festgelegt ist. Zusätzlich dient dieses Federelement 74 als Drehfeder, die durch die Drehbewegung der Mitnehmerscheibe 50 aus der den Kanal verschließenden Stellung des Ventilkörpers 62 tordiert wird, so dass bei Ausfall des Elektromotors 20 die Ventilstange 60 in ihre Ausgangsstellung oder eine andere beliebig festzulegende fall-safe-Position zurückgedreht wird. Des Weiteren ist es erforderlich, dass die axiale Erstreckung der Aufnahme 56 mindestens so groß ist wie der maximale Ventilhub der Ventilstange 60, wodurch ausgeschlossen wird, dass sich der Mitnehmerhebel 58 durch die translatorische Bewegung der Ventilstange 60 aus der Aufnahme 56 löst.

Des Weiteren ist zur zusätzlichen thermischen Abschirmung der Antriebseinheit 18 im Ventilgehäuse 12 ein umlaufender Kühlmittelkanal 78 ausgebildet, der beispielsweise an den Kühlmittelkreislauf des Verbrennungsmotors angeschlossen werden kann.

Die beschriebene Ventilvorrichtung benötigt einen sehr geringen Bauraum sowohl in axialer Richtung als auch senkrecht hierzu, da das Exzentergetriebe und die Oldham-Kupplung axial sehr klein bauend sind und der Elektromotor in Axialrichtung angeordnet werden kann und keine größeren Drehmomente als in bekannten Ausführungen aufbringen muss. Es wird lediglich eine geringe Anzahl an Bauteilen benötigt, die zudem einfach und ohne enge Toleranzen montiert und hergestellt werden können, so dass Kosten reduziert werden.

Es sollte deutlich sein, dass eine erfindungsgemäße Ventilvorrichtung beispielsweise auch als Klappenventil ausgebildet werden kann. Des Weiteren kann das Hohlrad als separates Bauteil ausgeführt sein oder in das Gehäuse eingespritzt werden. Auch eine andere Art der Lagerückmeldung ist möglich. Des Weiteren kann der Spindeltrieb entweder gleitend oder kugelumlaufend ausgeführt werden. Die Mitnehmerscheibe kann ebenfalls zusätzlich im Ventilgehäuse gelagert werden. Auch kann beispielsweise der Magnet zur Lagerrückmeldung an der Spindel angebracht werden. Weitere Modifikationen sind ebenfalls denkbar, ohne den Schutzbereich des Hauptanspruchs zu verlassen.

## Patentansprüche

1. Ventilvorrichtung zur Abgasrückführung in einem Verbrennungsmotor mit
einer Antriebseinheit (18), bestehend aus
einem Elektromotor (20) mit einer Antriebswelle (22), einem Exzenter (28) und einem Getriebe (33),
und einer Ventileinheit (10), bestehend aus
einem Verstellelement (60) und einem Ventilkörper (62),
wobei die Ventileinheit mittels der Antriebseinheit (18) bewegbar ist, **dadurch gekennzeichnet, dass**
das Getriebe ein Exzentergetriebe (33) ist, bei dem ein exzentrisch angetriebenes Planetenrad (38) abschnittsweise in ein feststehendes Hohlrad (36) greift und über eine Oldham-Kupplung (54) mit dem Verstellelement (60) gekoppelt ist, welches eine Ventilstange (60) mit einer Spindel (64) ist, die in eine Spindelmutter (66) greift, über die die Ventilstange (60) gelagert ist, wobei an dem Verstellelement (60) ein Mitnehmerhebel (58) ausgebildet ist, der rotationsübertragend in eine Aufnahme (56) an einer Mitnehmerscheibe (50) greift, welche über ein Federelement (74) in Richtung einer Kupplungsscheibe (46) der Oldham-Kupplung (54) belastet ist, wobei die Aufnahme (56) der Mitnehmerscheibe (50) eine axiale Erstreckung aufweist, die zumindest der Hubhöhe der Ventilstange (60) entspricht und wobei das Federelement (74) als Drehfeder dient, über die die Spindel (64) in Richtung einer Ausgangsstellung belastet ist.

2. Ventilvorrichtung zur Abgasrückführung in einem Verbrennungsmotor nach Anspruch
**dadurch gekennzeichnet, dass**
der Exzenter (28) zylindrisch ist und auf der Antriebswelle (22) befestigt ist, auf dem das Planetenrad (38) gelagert ist.

3. Ventilvorrichtung zur Abgasrückführung in einem Verbrennungsmotor nach einem der Ansprüche 1 oder 2,
**dadurch gekennzeichnet, dass**
an der zum Verstellelement (60) weisenden Seite des Planetenrades (38) zwei axiale Vorsprünge (42) ausgebildet sind, die sich in radialer Richtung erstrecken und die In zwei erste Ausnehmungen (44) der Kupplungsscheibe (46) der Oldham-Kupplung (54) greifen.

4. Ventilvorrichtung zur Abgasrückführung in einem Verbrennungsmotor nach Anspruch 3,
**dadurch gekennzeichnet, dass**
die Ausnehmungen (44) der Kupplungsscheibe (46) radial gegenüberliegend ausgebildet sind und zum Ausgleich der Taumelbewegung des Planetenrades (38) die Vorsprünge (42) des Planetenrades (38) in die Ausnehmungen (44) der Kupplungsscheibe (46) greifen, weiche eine größere radiale Erstreckung aufweisen als die Vorsprünge (42) des Planetenrades (38).

5. Ventilvorrichtung zur Abgasrückführung in einem Verbrennungsmotor nach Anspruch 3 oder 4,
**dadurch gekennzeichnet, dass**
die Kupplungsscheibe (46) zwei weitere radiale Ausnehmungen (48) aufweist, wobei die insgesamt vier Ausnehmungen (44, 48) um 90° versetzt zueinander ausgebildet sind, und wobei an der mit dem Verstellelement (60) gekoppelten Mitnehmerscheibe (50) zwei axiale Vorsprünge (52) ausgebildet sind, die in die zwei weiteren radialen Ausnehmungen (48) der Kupplungsscheibe (46) greifen.

6. Ventilvorrichtung zur Abgasrückführung in einem Verbrennungsmotor nach einem der vorhergehenden Ansprüche,
**dadurch gekennzeichnet, dass**
am Exzenter (28) eine Magnetringplatte (30) befestigt ist, deren Magnete (32) mit einem berührungslosen Sensor kommunizieren.

7. Ventilvorrichtung zur Abgasrückführung in einem Verbrennungsmotor nach einem der vorhergehenden Ansprüche,
**dadurch gekennzeichnet, dass**
das Hohlrad (36) in einem Antriebsgehäuse (16) befestigt oder einstückig mit dem Antriebsgehäuse (16) ausgebildet ist.

## Claims

1. Valve device for exhaust gas recirculation in an internal combustion engine, comprising
a drive unit (18) consisting of
an electric motor (20) comprising a drive shaft (22), an eccentric (28) and a gearing (33),
and a valve unit (10) consisting of
an adjustment element (60) and a valve body (62),
wherein the valve unit is adapted to be moved by means of the drive unit (18),
**characterized in that**
the gearing is an eccentric gearing (33) in which an eccentrically driven planetary gear (38) sectionally meshes with a stationary hollow gear (36) and is coupled to the adjustment element (60) via an Oldham coupling (54), the adjustment element being a valve rod (60) with a spindle (64) meshing with a spindle nut (66) by which the valve rod (60) is supported, wherein a tappet (58) is formed on the adjustment element (60), said tappet engaging in a receptacle (56) in a drive plate (50) in a manner transmitting rotation, the receptacle being loaded in the direction of a coupling disc (46) of the Oldham coupling (54) via a spring element (74), the receptacle (56) of the drive disc (50) having an axial dimension that at least corresponds to the stroke of the valve rod (60), and wherein the spring element (74) serves as a torsion spring via which the spindle (64) is loaded in the direction of an initial position.

2. Valve device for exhaust gas recirculation in an internal combustion engine of claim 1, **characterized in that** the eccentric (28) is cylindrical and is mounted on the drive shaft (22) on which the planetary gear (38) is supported.

3. Valve device for exhaust gas recirculation in an internal combustion engine of one of claims 1 or 2, **characterized in that** the side of the planetary gear (38) directed towards the adjustment element (60) is formed with two axial protrusions (42) which extend in the radial direction and engage two first recesses (44) of the coupling disc (46) of the Oldham coupling (54).

4. Valve device for exhaust gas recirculation in an internal combustion engine of claim 3, **characterized in that** the recesses (44) of the coupling disc (46) are formed radially opposite each other, and that the protrusions (42) of the planetary gear (38) engage the recesses (44) of the coupling disc (46) to compensate for the tumbling motions of the planetary gear (38), the recesses having a larger radial dimension than the protrusions (42) of the planetary gear (38).

5. Valve device for exhaust gas recirculation in an internal combustion engine of one of claims 3 or 4, **characterized in that** the coupling disc (46) has two further radial recesses (48), wherein the total of four recesses (44, 48) are formed offset by 90° with respect to each other, and wherein two axial protrusions (52) are formed on the drive disc (50) coupled with the adjustment element (60), which protrusions engage the two further radial recesses (48) of the coupling disc (46).

6. Valve device for exhaust gas recirculation in an internal combustion engine of one of the preceding claims, **characterized in that** a magnetic ring plate (30) is fastened to the eccentric, whose magnets (32) communicate with a contactless sensor.

7. Valve device for exhaust gas recirculation in an internal combustion engine of one of the preceding claims, **characterized in that** the hollow gear (36) is mounted in a drive housing (16) or is formed integrally with the drive housing (16).

## Revendications

1. Dispositif de soupape destiné à la recirculation de gaz d'échappement dans un moteur à combustion interne, comportant
une unité d'entrainement (18) avec
un moteur électrique (20) comportant un arbre d'entrainement (22), un excentrique (28) et un engrenage (33),
et une unité de soupape (10) formée par
un élément d'ajustage (60) et un corps de soupape (62),
ladite unité de soupape étant déplaçable par l'unité d'entrainement (18), **caractérisé en ce que**
l'engrenage est un engrenage excentrique (33) dans lequel une roue planétaire (38) excentriquement entrainée engage, par sections, une couronne (36) fixe et étant couplée à l'élément d'ajustage (60) par un accouplement Oldham (54), ledit élément étant une tige de soupape (60) avec une broche (64) engageant un écrou de broche (66) par lequel la tige de soupape (60) est supportée, un levier entraîneur (58) étant formé sur l'élément d'ajustage (60), qui s'engage, d'une manière transmettant la rotation, dans un logement (56) sur une rondelle d'entrainement (50) qui est sollicitée par un élément ressort (74) vers une rondelle d'accouplement (46) de l'accouplement Oldham (54), le logement (56) de la rondelle d'entrainement (50) présente une étendue axiale au moins égale au course de la tige de soupape (60), et dans lequel l'élément de ressort (74) sert comme ressort de torsion par lequel la broche (64) est sollicitée vers une position initiale.

2. Dispositif de soupape destiné à la recirculation de gaz d'échappement dans un moteur à combustion interne selon la revendication 1, **caractérisé en ce que** l'excentrique (28) est cylindrique est monté sur l'arbre d'entrainement (22) sur lequel la roue planétaire (38) est supportée.

3. Dispositif de soupape destiné à la recirculation de gaz d'échappement dans un moteur à combustion interne selon l'une des revendications 1 ou 2, **caractérisé en ce que** sur le côté de la roue planétaire (38) orienté vers l'élément d'ajustage (60), deux saillies axiales (42) sont formées qui s'étendent dans la direction radiale et s'engagent dans deux premiers évidements (44) de la rondelle d'accouplement (46) de l'accouplement Ol-dham (54).

4. Dispositif de soupape destiné à la recirculation de gaz d'échappement dans un moteur à combustion interne selon la revendication 3, **caractérisé en ce que** les évidements (44) de la rondelle d'accouplement (46) sont formés radialement opposé l'un par rapport à l'autre, et les saillies (42) de la roue planétaire (38) s'engagent dans les évidements (44) de la rondelle d'accouplement (46) pour l'équilibrage du mouvement de vacillement de la roue planétaire (38), lesdits évidements ayant une étendue radiale supérieure à celle des saillies (42) de la roue planétaire (38).

5. Dispositif de soupape destiné à la recirculation de gaz d'échappement dans un moteur à combustion interne selon l'une des revendications 3 ou 4, **caractérisé en ce que** la rondelle d'accouplement (46) comprend deux autres évidements radiaux (48), le total de quatre évidements (44, 48) étant formés décalé par 90° l'un par rapport à l'autre, et dans lequel deux saillies (52) axiales sont formées sur la rondelle d'entrainement (50) couplée à l'élément d'ajustage (60), lesdites saillies s'engageant dans les deux autres évidements radiaux (48) de la rondelle d'accouplement (46).

6. Dispositif de soupape destiné à la recirculation de gaz d'échappement dans un moteur à combustion interne selon l'une quelconque des revendications précédentes, **caractérisé en ce qu'**une plaque à anneau magnétique (30) est fixée sur l'excentrique (28), dont les aimants (32) communiquent avec un capteur sans contact.

7. Dispositif de soupape destiné à la recirculation de gaz d'échappement dans un moteur à combustion interne selon l'une quelconque des revendications précédentes, **caractérisé en ce que** la couronne (36) est fixée dans un carter d'entrainement (16) ou est formée d'un seul tenant avec le carter d'entrainement (16).
